# EUROPEAN PATENT SPECIFICATION

(11) **EP 1 662 605 B1**
(45) Date of publication and mention of the grant of the patent: **30.09.2009**
(21) Application number: 05025034.9
(22) Date of filing: 16.11.2005
(51) Int. Cl.: H01Q 1/24, H01Q 1/38, H01Q 7/00, H04B 1/03

(54) **FM transmission antenna device in a portable terminal**
FM Sendeantennenvorrichtung in einem tragbaren Endgerät
Dispositif d' antenne de transmission FM dans un terminal portatif

(30) Priority: 25.11.2004 KR 2004097672
(43) Date of publication of application: 31.05.2006
(73) Proprietor: Samsung Electronics Co., Ltd., Suwon-si, Gyeonggi-do (KR)
(72) Inventor: Oh, Gung-Gun, Suwon-si, Gyeonggi-do (KR)
(74) Representative: Lang, Johannes

(56) References cited:
- GB-A- 2 330 487
- GB-A- 2 330 694
- US-A- 5 710 987
- US-B1- 6 223 060
- PATENT ABSTRACTS OF JAPAN vol. 2000, no. 10, 17 November 2000 (2000-11-17) & JP 2000 209014 A (NEC SAITAMA LTD), 28 July 2000 (2000-07-28)
- PATENT ABSTRACTS OF JAPAN vol. 1995, no. 11, 26 December 1995 (1995-12-26) & JP 07 221822 A (KENWOOD CORP), 18 August 1995 (1995-08-18)

## Description

### BACKGROUND OF THE INVENTION

### Field of the Invention

The present invention relates generally to a portable terminal. More particularly, the present invention relates to a transmission antenna device in a portable terminal, for outputting a voice signal and sound from the portable terminal to an external sound device.

### Description of the Related Art

A portable terminal is typically a device that provides wireless communications between users or between a user and a service provider through a base station. Initially, in the early development of portable terminals, only limited mobile communication services like voice service and short message transmission were provided. Now, however, a variety of mobile content is increasingly available, including mobile banking, on-line games, and Video-On-Demand (VOD).

The expansion of mobile communications through the portable terminal is a driving force behind providing additional, diverse functions for portable terminals, like music file reproduction and image capturing and playing, which go beyond the simple input and output of voice signals and text information.

Also, as compression technology for music files and images has been further developed, high-quality sounds and images can be stored with less memory capacity. Thus, multimedia files can be stored directly in and enjoyed with the portable terminal.

However, the limited size of an output device in the portable terminal, that is, a display and a speaker, places limits on the improvement of the quality of image and sound output. Moreover, since the volume of the speaker is limited, a separate earphone is needed to enjoy high-quality sound. If a user is driving, he may have difficulty in hearing surrounding noises while listening to music through an earphone. This may be distracting to a driver. In addition, a user may not recognize an event like an incoming voice call or message while listening to music through the earphone.

Accordingly, there is a need for an improved portable terminal which has an improved quality of image and sound output.

From US 6,223,060, there is known to detachably mount on a telefone handset such as a cellular phone a separate housing containing voice recording and/or radio frequency transmitting circuitry for broadcasting radio frequency signals corresponding to a recorded message or the voice of the other party to a telephone call to a nearby radio receiver. The housing may be detachably mounted between an inner face of the handset and a battery pack. According to this teaching, no modification of the handset itself or the battery pack is required or desired.

From GB 2 330 487, there is known a FM transmitter apparatus for in-car usage of a portable audio appliance such as a portable CD player, where the FM transmitter is plugged via a cable into a headphone socket of the CD player to receive CD audio output for transmission on an unused FM radio channel.

Document US 5,710,987 teaches a radiotelephony/pager unit as a combination of a pager unit and a portable radiotelephone in a single unit. According to this document, a pager receiver unit and a pager receiver antenna are comprised in this radiotelephony/pager unit, where the pager receiver antenna forms a loop antenna substantially surrounding a user interface element such as a display, keypad, earpiece or volume control buttons.

### SUMMARY OF THE INVENTION

An aspect of the present invention is to address at least the above problems and/or disadvantages and to provide at least the advantages described below. Accordingly, an aspect of the present invention is to provide a portable terminal that outputs sound from the portable terminal to an external device by use of an FM transmitter.

Another aspect of the present invention is to provide a portable terminal that outputs voice through a speaker mounted in a vehicle.

In accordance with an aspect of the present invention, a portable terminal has an FM transmission antenna device. The FM transmission antenna device has an antenna pattern which is attached to a surface of the portable terminal. A flexible printed circuit (FPC) FPC extends from the antenna pattern, and a connector is provided at an end of the FPC to connect the FPC to an FM transmitter.

### BRIEF DESCRIPTION OF THE DRAWINGS

The above and other objects, features, and advantages of certain exemplary embodiments of the present invention will be more apparent from the following description taken in conjunction with the accompanying drawings, in which:
FIG. 1 is a perspective view of a portable terminal having an FM transmission antenna device according to an exemplary embodiment of the present invention;
FIG. 2 is an exploded perspective view of the FM transmission antenna device in the portable terminal illustrated in FIG. 1; and
FIG. 3 is a view describing the operation of the FM transmission antenna device illustrated in FIG. 2.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the exemplary embodiments of the invention. Accordingly, those of ordinary skill in the art will recognize that various changes and modifications of the exemplary embodiments described herein can be made without departing from the scope and spirit of the invention. Also, descriptions of well-known functions and constructions are omitted for clarity and conciseness.

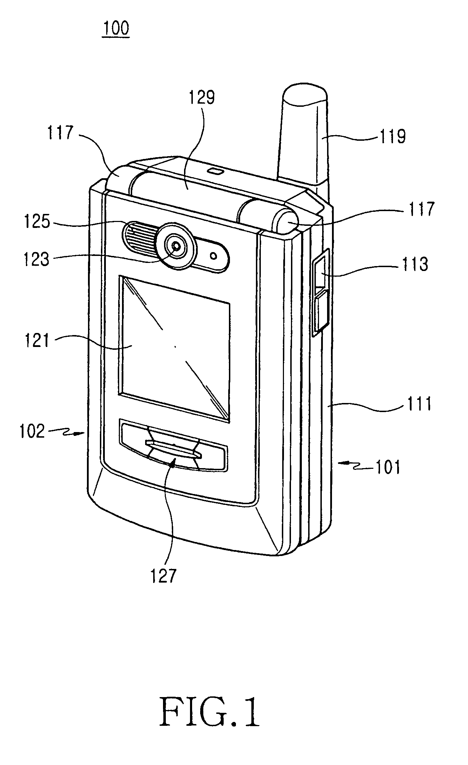

FIG. 1 is a perspective view of a portable terminal having an FM transmission antenna device according to an exemplary embodiment of the present invention.

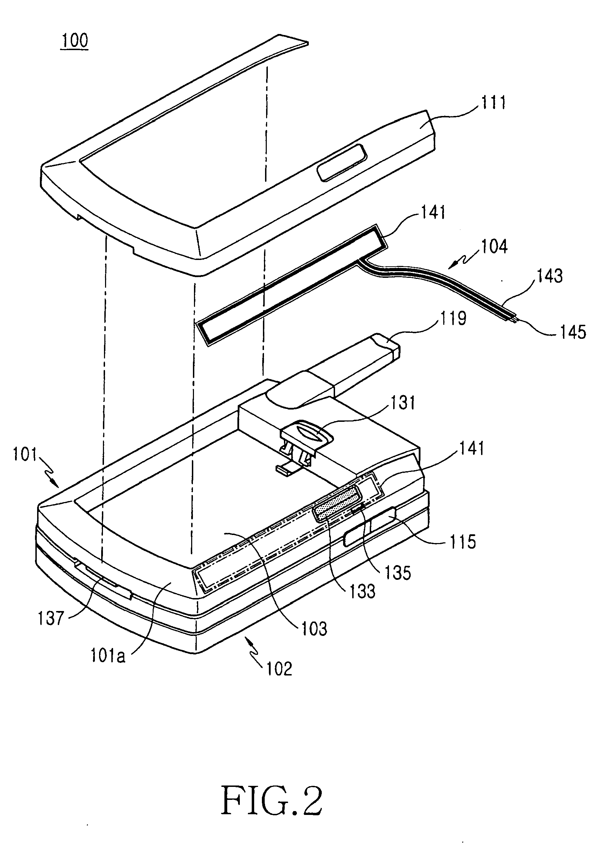

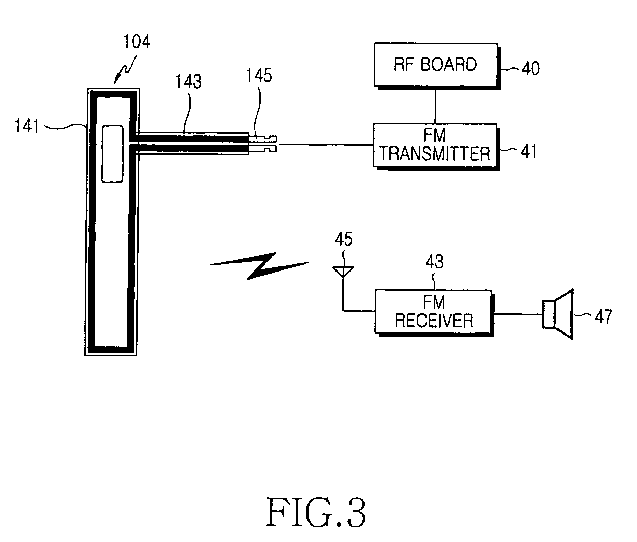

FIG. 2 is an exploded perspective view of the FM transmission antenna device in the portable terminal illustrated in FIG. 1. FIG. 3 is a view describing the operation of the FM transmission antenna device illustrated in FIG. 2.

Referring to FIGS. 1 and 2, a portable terminal 100 equipped with an FM transmission antenna device 104 according to an exemplary embodiment of the present invention is preferably a folder-type terminal including a first housing 101 and a second housing 102 configured to rotate away from or toward the first housing 101, in a face to face configuration.

The first housing 101 is provided, at an upper end thereof, with a pair of side hinge arms 117 that face apart from each other. The second housing 102 is provided, at an end thereof, with a center hinge arm 129. The center hinge arm 129 is rotatably engaged between the side hinge arms 117, and therefore the second housing 102 is rotatably engaged with the first housing 101.

While not shown, a keypad and a transmitter are provided on an inner surface of the first housing 101, and a main display and a receiver reside on an inner surface of the second housing 102. As the second housing 102 rotates over the first housing 101, the keypad, the transmitter, the main display and the receiver are opened and closed.

The first housing 101 is further provided with a volume control key 115 and an ear-microphone jack 113 on both sides thereof, with an antenna device 119 at the upper end thereof, with an interface connector 137 at a lower end thereof, and with speakers 133 substantially symmetrical to each other on both sides thereof.

A sub-display 121 and an auxiliary keypad 127 for invoking limited functions are provided on an outer surface of the second housing 102. In some portable terminal products, a camera 123 and a flash 125 are provided in the vicinity of the sub-display 121, for capturing images.

When the portable terminal 100 is placed in a play mode to play multimedia files including music and moving pictures, the auxiliary keypad 127 may be used to invoke related functions. Thus, the auxiliary keypad 127 can be configured to include "Play/Stop", "Fast Forward" and "Rewind" keys.

The portable terminal 100 has the FM transmission antenna device 104 in addition to the antenna device 119 for communicating with the base station.

The FM transmission antenna device 104 includes an antenna pattern 141 attached to a portion of an outer surface 101a of the first housing 101, and a flexible printed circuit (FPC) 143 for connecting the antenna pattern 141 to an FM transmitter 41 (shown in FIG. 3) which is mounted to a radio frequency (RF) board 40 (also shown in FIG. 3).

The antenna pattern 141 can be formed by bending a conductive plate of sheet metal, or it can be formed by an FPC having a printed circuit pattern of a thin copper film and coated with an insulation material. Referring to FIG. 2, the antenna pattern 141 is preferably fabricated in the form of a loop antenna attached onto the outer surface 101 a of the first housing 101.

The FPC 143 extends from the antenna pattern 141 into the first housing 101 through a hole 135 formed in the outer surface 101a of the first housing 101. An end of the FPC 145 is formed into a connector 145 by melting or attaching a rigid conductive plate, for connecting to the FM transmitter 41. Therefore, the antenna pattern 141 is connected to the FM transmitter 41 via the FPC 143 and the connector 145.

The portable terminal 100 is provided with a dummy cover 111 for protecting the FM transmission antenna device 104 attached onto the outer surface of the first housing 101 and improving the appearance of the portable terminal 100. The dummy cover I I 1 is preferably configured to cover both sides and a lower side of the outer surface of the portable terminal.

When the portable terminal 100 resides near an external sound device, for example, an audio device for a vehicle, the FM transmitter 41 and the FM transmission antenna device 104 outputs sound from the portable terminal to the external sound device if the user puts the portable terminal 100 into a broadcasting mode.

With reference to FIG. 3, a description will be made of the operation for outputting sound from the portable terminal 100 through the external sound device using the FM transmitter 41 and the FM transmission antenna 104. When an external sound device capable of FM reception is available while the portable terminal 100 is in a voice call mode or a multimedia file play mode, the user places the portable terminal 100 into the broadcasting mode. The portable terminal 100 transmits the sound of a multimedia file being played in the broadcasting mode through the FM transmitter 41 and the FM transmission antenna device 104. The transition to broadcasting mode is preferably performed by manipulating the keypad installed on the first housing 101 and the auxiliary keypad 127 provided on the outer surface of the second housing 102.

The signal from the portable terminal 100 is detected by an antenna 45 and an FM receiver 43 of the external sound device (such as an audio device for a vehicle) and then output through a speaker 47. Therefore, the user can enjoy sound from the portable terminal 100 via the external sound device without using an additional earphone.

In accordance with the present invention as described above, in addition to the antenna device for transmitting/receiving signals with a base station, the portable terminal is further provided with an FM transmission antenna device that is configured to transmit a sound signal from a multimedia file being played to an external sound device. Therefore, multimedia files stored in the portable terminal can be played and enjoyed through an external sound device in a vehicle or a house. Furthermore, the FM transmission antenna device is separate from the existing antenna device and is preferably plate-like (for example, a thin copper film) so that it can be attached onto an inner or outer surface of the portable terminal. Thus, there is no need for additional antenna space. Consequently, the present invention contributes to the miniaturization of portable terminals by expanding the functions of the portable terminals without affecting their size.

## Claims

1. A portable terminal (100) for providing wireless communication through a base station and for outputting a voice signal and sound to an external sound device, said portable terminal (100) comprising:
means for storing multimedia files;
a first housing (101) comprising a keypad;
an antenna device (119) for communicating with the base station; said antenna device (119) being provided at an upper end of said first housing (101);
an FM transmitter (41);
an FM transmission antenna device (104) connected to said FM transmitter (41);
means for allowing a user to put said portable terminal (100) into a broadcast mode while the portable terminal (100) is in a voice call mode or a multimedia file play mode,
wherein said FM transmitter (41) and said FM transmission antenna device (104) are adapted to, in said broadcast mode, output said voice signal and sound to said external sound device,
**characterized in** said FM transmission antenna device (104) comprising:
an antenna pattern (141) attached to the outer surface (101a) of the first housing (101) of the portable terminal (100);
a flexible printed circuit (143) that extends from the antenna pattern (141); and
a connector (145) provided at an end of the flexible printed circuit (143) for connecting the flexible printed circuit (143) to the FM transmitter (41).

2. The portable terminal (100) of claim 1, comprising a dummy cover for covering at least a portion of the outer surface (101a) of the first housing (101) of the portable terminal (100).

3. The portable terminal (100) of claim 2, further comprising
a hole (135) at the portion of the outer surface (101a) of the first housing (101), for allowing the flexible printed circuit (143) to be extended into the portable terminal (100) through the hole (135).

4. The portable terminal (100) of claim 1, further comprising
a speaker hole (133) at a predetermined position of the outer surface (101a) of the first housing (101), wherein the antenna pattern (141) is a loop antenna attached onto the outer surface (101a) of the portable terminal (100) to surround the speaker hole (133).

5. The portable terminal (100) of claim 1, wherein
the antenna pattern (141) is a printed circuit pattern formed of a thin copper film and coated with an insulation material on both surfaces.

## Patentansprüche

1. Tragbares Endgerät (100) zum Bereitstellen von drahtloser Kommunikation über eine Basisstation und zum Ausgeben eines Sprachsignals und eines Tons an eine externe Tonvorrichtung, wobei das tragbare Endgerät (100) aufweist:
Mittel zum Speichern von Multimediadateien;
ein erstes Gehäuse (101), das ein Tastenfeld aufweist;
eine Antennenvorrichtung (119) zum Kommunizieren mit der Basisstation, wobei die Antennenvorrichtung (119) an einem oberen Ende des ersten Gehäuses (101) angeordnet ist;
einen FM-Sender (41);
eine FM-Sendeantennenvorrichtung (104), die mit dem FM-Sender (41) verbunden ist;
Mittel, um es einem Benutzer zu erlauben, das tragbare Endgerät (100) in einen Aussendemodus zu versetzen, während das tragbare Endgerät (100) in einem Telefonanrufmodus oder einem Multimediadatei-Wiedergabemodus ist,
worin der FM-Sender (41) und die FM-Sendeantennenvorrichtung (104) eingerichtet sind, in dem Aussendemodus, das Sprachsignal und Ton an die externe Tonvorrichtung auszugeben;
**dadurch gekennzeichnet, dass** die FM-Sendeantennenvorrichtung (104) aufweist:
ein Antennenmuster (141), das an die äußere Oberfläche (101a) des ersten Gehäuses (101) des tragbaren Endgeräts (100) befestigt ist;
eine flexible gedruckte Schaltung (143), welche sich von dem Antennenmuster (141) weg erstreckt; und einen Verbinder (145), der an einem Ende der flexiblen gedruckten Schaltung (143) bereitgestellt ist, um die flexible gedruckte Schaltung (143) mit dem FM-Sender (41) zu verbinden;.

2. Tragbares Endgerät (100) nach Anspruch 1, aufweisend eine Dummy-Abdeckung zum Abdecken zumindest eines Teils der äußeren Oberfläche des tragbaren Endgeräts (100).

3. Tragbares Endgerät (100) nach Anspruch 2, ferner aufweisend
ein Loch (135) in dem Abschnitt der äußeren Oberfläche (101a), um es der flexiblen gedruckten Schaltung (143) zu erlauben, sich in das tragbare Endgerät (100) durch das Loch (135) zu erstrecken.

4. Tragbares Endgerät (100) nach Anspruch 1, ferner aufweisend
ein Lautsprecherloch (133) an einer vorbestimmten Position der äußeren Oberfläche (101a), worin das Antennenmuster (141) eine Schleifenantenne ist, die auch an der äußeren Oberfläche (101a) des tragbaren Endgeräts (100) angebracht ist, um das Lautsprecherloch (133) zu umgeben,

5. Tragbares Endgerät (100) nach Anspruch 1, worin
das Antennenmuster (141) ein gedrucktes Schaltungsmuster ist, das aus einem dünnen Kupferfilm gebildet ist und das auf beiden Seiten mit einem Isolationsmaterial beschichte t ist.

## Revendications

1. Terminal portable (100) destiné à fournir des communications sans fil via une station de base et à produire en sortie un signal vocal et du son à un dispositif sonore externe, ledit terminal portable (100) comprenant :
un moyen destiné à stocker des fichiers multimédias ;
un premier boîtier (101) comprenant un clavier ;
un dispositif d'antenne (119) destiné à communiquer avec la station de base, ledit dispositif d'antenne (119) étant fourni au niveau d'une extrémité supérieure dudit premier boîtier (101) ;
un émetteur FM (41) ;
un dispositif d'antenne d'émission FM (104) connecté audit émetteur FM (41) ;
un moyen destiné à permettre à un utilisateur de placer ledit terminal portable (100) dans un mode de diffusion générale alors que le terminal portable (100) est dans un mode d'appel vocal ou dans un mode de reproduction d'un fichier multimédia ;
dans lequel ledit émetteur FM (41) et ledit dispositif d'antenne d'émission FM (104) sont conçus, dans ledit mode de diffusion générale, pour produire en sortie ledit signal vocal et ledit son audit dispositif sonore externe ;
**caractérisé en ce que** ledit dispositif d'antenne d'émission FM (104) comprend :
un motif d'antenne (141) fixé sur la surface extérieure (101a) du premier boîtier (101) du terminal portable (100) ;
un circuit imprimé flexible (143) qui s'étend à partir du motif d'antenne (141) ; et
un connecteur (145) fourni à une extrémité du circuit imprimé flexible (143) afin de connecter le circuit imprimé flexible (143) à l'émetteur FM (41).

2. Terminal portable (100) selon la revendication 1, comprenant une fausse couverture destinée à couvrir au moins une portion de la surface extérieure (101a) du premier boîtier (101) du terminal portable (100).

3. Terminal portable (100) selon la revendication 2, comprenant en outre un trou (135) dans la portion de la surface extérieure (101a) du premier boîtier (101), afin de permettre au circuit imprimé flexible (143) de rentrer dans le terminal portable (100) par le trou (135).

4. Terminal portable (100) selon la revendication 1, comprenant en outre un trou de haut-parleur (133) dans une position prédéterminée de la surface extérieure (101a) du premier boîtier (101), dans lequel le motif d'antenne (141) est une antenne en boucle fixée sur la surface extérieure (101a) du terminal portable (100) afin d'entourer le trou de haut-parleur (133).

5. Terminal portable (100) selon la revendication 1, dans lequel le motif d'antenne (141) est un motif de circuit imprimé formé sur un film de cuivre mince et revêtu d'un matériau d'isolation sur les deux faces.
